# EUROPÄISCHE PATENTANMELDUNG

(11) **EP 2 418 159 A1**
(43) Veröffentlichungstag der Anmeldung: **15.02.2012**
(21) Anmeldenummer: 10172806.1
(22) Anmeldetag: 13.08.2010
(51) Int. Cl.: B65G 11/06, B65G 27/02

(54) **Wendel für einen Vibrationswendelförderer**

(71) Anmelder: Krämer AG Bassersdorf, 8303 Bassersdorf (CH)
(72) Erfinder: Heller, Roger, CH-8484, Weisslingen (CH)
(74) Vertreter: Störzbach, Michael Andreas

(57) **Zusammenfassung**

Eine Wendel für einen Vibrationswendelförderer besteht aus einzelnen Wendelsegmenten (2). Diese sind auf ein Tragrohr (1) aufgeschoben und darauf mittels eines Spannrings (3) fixiert. Diese Wendel kann auf einem Unterbau, beispielsweise einer einen Vibrationsantrieb enthaltenden Maschine, zusammengesetzt werden, indem die Wendelsegmente (2) nacheinander aufgestapelt werden. Entsprechend können bei der Demontage die Wendelsegmente (2) einzeln abgebaut werden. Alternativ kann auch die Wendel als Ganzes auf die Maschine gebracht oder von dieser abgenommen werden.

## Beschreibung

Die Erfindung betrifft eine Wendel für einen Vibrationswendelförderer, wobei die Wendel aus mehreren in Richtung der Längsachse der Wendel aneinander angrenzenden Wendelsegmenten zusammengesetzt ist.

Das Dokument W02008/154948A1 betrifft eine Vorrichtung zum Entstauben von pharmazeutischen Tabletten oder Kapseln, wobei die Tabletten oder Kapseln auf einer vibrierenden Wendel gefördert werden. Die Wendel ist dabei aus mehreren Segmenten zusammengesetzt, wobei jedes Segment einen Umgang der Wendel enthält. Eine solche Wendel hat die Vorteile, dass die einzelnen Segmente einfach herstellbar sind und dass die Länge der Wendel durch Variation der Anzahl der Segmente an die Bedürfnisse der Entstaubung anpassbar ist. Ausserdem ist eine solche Wendel einfach zu reinigen, indem sie demontiert wird und die einzelnen Segmente gereinigt, beispielsweise in einer Spülmaschine gewaschen werden. Zum Montieren der Wendel werden die Segmente aufeinander gestapelt, wobei die richtige Position mit Hilfe von Positionierelementen gefunden wird, welche aus Nocken bestehen, die in Einschnitte eines benachbarten Segments eingreifen. Die einzelnen Segmente werden nacheinander auf einer Maschinenbasis aufgestapelt und anschliessend wird der Stapel mit Hilfe einer zentralen Spindel auf der Basis fixiert. Im Dokument ist auch erwähnt, dass die Segmente aneinander befestigt werden können, beispielsweise durch Clips.

Der beschriebene Aufbau der Wendel hat den Nachteil, dass die korrekte Drehlage jedes Segments an Hand der genannten

Positionierelemente gesucht werden muss, bevor das Segment auf das darunter liegende Segment aufgesetzt wird.

Ausgehend von diesem Stand der Technik liegt der Erfindung die Aufgabe zu Grunde, eine Wendel vorzuschlagen, die so aufgebaut ist, dass sie sehr einfach und trotzdem bedarfsweise auf verschiedene Arten montiert und demontiert werden kann.

Gelöst wird diese Aufgabe dadurch, dass die Wendelsegmente auf einem zentralen Tragrohr abnehmbar angeordnet sind.

Diese erfindungsgemässe Lösung hat den Vorteil, dass die Wendel entweder auf einer Maschine durch Aufstapeln einzelner Wendelsegmente aufgebaut oder als Ganzes vormontiert und auf die Maschine aufgesetzt werden kann. Dieser Vorteil gilt auch beim Demontieren der Wendel, indem entweder die ganze Wendel mit dem Tragrohr von der Maschine entfernt wird oder die einzelnen Wendelsegmente nacheinander vom Tragrohr genommen werden.

Nach einer Ausführungsart enthalten die Wendelsegmente jeweils einen Wendelumgang. Dies gestattet eine besonders einfache Herstellung der Wendelsegmente, beispielsweise im Spritzgussverfahren aus Kunststoff.

Nach einer weiteren Ausführungsart sind am Tragrohr und in einer zentralen Öffnung der Wendelsegmente zusammenwirkende Elemente vorhanden, die das Drehen der Wendelsegmente auf dem Tragrohr verhindern. Dadurch können die Wendelsegmente ausschliesslich in der korrekten Drehlage auf das Tragrohr aufgeschoben und nach dem Aufschieben nicht mehr gedreht werden, so dass sie ohne weiteres Zutun auf die bereits montierten Wendelsegmente passen.

Nach einer anderen Ausführungsart ist an einem ersten Ende der Wendel ein mit dem Tragrohr verbundener Spannring angeordnet. Dadurch lässt sich die Gesamtheit der Wendelsegmente auf dem Tragrohr fixieren.

Eine weitere Ausführungsart sieht vor, dass der Spannring durch eine Bajonettverbindung mit dem Tragrohr verbunden ist. Damit kann die Verbindung rasch und einfach hergestellt und gelöst werden.

Gemäss einer anderen Ausführungsart ist an einem zweiten Ende der Wendel ein mit dem Tragrohr verbundener Einlaufteller angeordnet. Damit können die Wendelsegmente einfach und schnell zu einer Wendel aufgestapelt werden.

Nach einer weiteren Ausführungsart werden das Tragrohr und die darauf angeordneten Wendelsegmente von einer Spindel durchragt, die dazu bestimmt ist, die Wendel an einem Maschinenteil zu befestigen. Durch diese Massnahme kann wahlweise die Wendel als Ganzes oder zunächst nur das Tragrohr auf einer Maschine befestigt werden.

Gemäss einer anderen Ausführungsart hat die Spindel an mindestens einem ihrer Enden ein Gewinde. Dies ermöglicht eine einfache Montage der Spindel.

Eine weitere Ausführungsart sieht vor, dass das Tragrohr aus mindestens zwei axial hintereinander angeordneten Teilen besteht. Dadurch lässt sich das Tragrohr in einer gewünschten Länge aus den genannten Teilen zusammensetzen.

Nach einer weiteren Ausführungsart besteht die Spindel aus mindestens zwei axial hintereinander angeordneten Teilen, so dass sich diese in einer gewünschten Länge aus den genannten Teilen zusammensetzen lässt.

Schliesslich ist gemäss einer weiteren Ausführungsart vorgesehen, dass die Teile der Spindel durch eine Gewindeverbindung miteinander verbunden sind. So lassen sich die einzelnen Teile besonders schnell und einfach miteinander verbinden und voneinander lösen.

Ausführungsbeispiele der Erfindung werden nachstehend unter Bezugnahme auf die angefügten Zeichnungen beispielsweise näher beschrieben. Es zeigt
- Figur 1: eine perspektivische Explosionsansicht einer Wendel,
- Figur 2: eine perspektivische Ansicht eines Wendelsegments,
- Figur 3: einen geschnittenen Ausschnitt einer besonderen Ausführungsart und
- Figur 4: eine perspektivische Ansicht einer montierten Wendel.

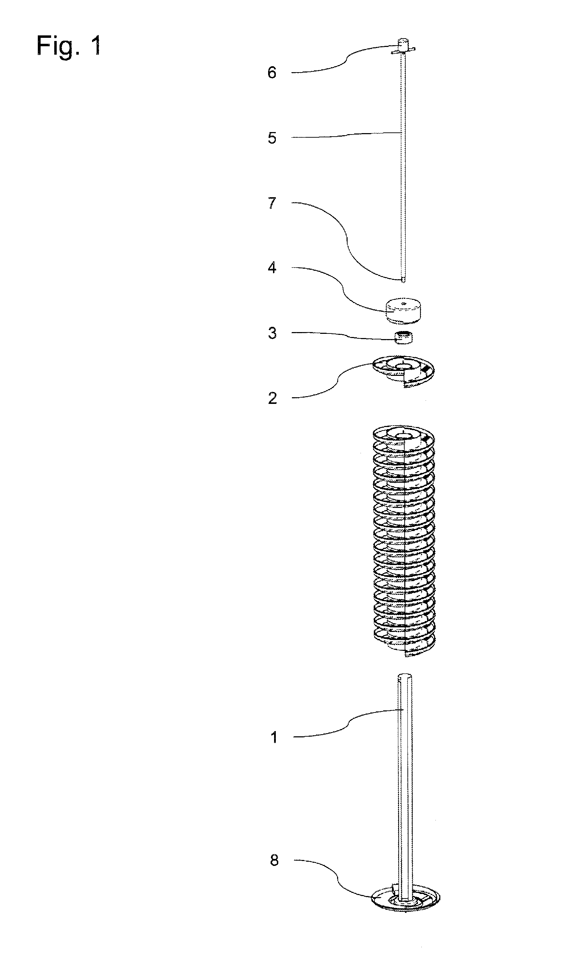

Figur 1 zeigt in einer perspektivischen Explosionsansicht eine Wendel für einen Vibrationswendelförderer in der für deren Betrieb vorgesehenen Lage, das heisst mit vertikal angeordneter Längsachse der Wendel. Der Kern der Wendel wird durch ein Tragrohr 1 gebildet, das sich über die ganze Länge der Wendel erstreckt. Auf diesem Tragrohr 1 sind eine Anzahl Wendelsegmente 2 aufgereiht, wobei jedes Segment 2 einen Wendel-Umgang umfasst. Die Anzahl der Segmente 2 wird durch die geforderte Länge der Transportbahn bestimmt, entlang welcher Teile zu fördern sind. Die Wendelsegmente 2 werden auf dem Tragrohr 1 durch einen Spannring 3 festgehalten, der auf noch zu beschreibende Weise mit dem in der Figur oberen Ende des Tragrohrs 1 verbunden ist. Vorteilhaft ist am unteren Ende der Wendel ein Einlaufteller 8 angeordnet, auf den die Wendelsegmente 2 derart passend aufgesetzt werden, dass ausgehend von diesem Einlaufteller 8 vom unteren zum oberen Ende der Wendel eine durchgehende Transportbahn für Teile gebildet wird.

Die bis hier beschriebenen Teile der Wendel gestatten eine erste Art der Montage der Wendel wie folgt. Das Tragrohr 1 mit dem an seinem unteren Ende befestigten Einlaufteller 8 wird unabhängig von der Maschine, auf welcher die Wendel zum Einsatz kommt, mit Wendelsegmenten 2 bestückt. Nach dem Anbringen des Spannrings 3 wird die Wendel auf die genannte Maschine aufgesetzt und dort mit Hilfe einer Spindel 5 fixiert. Die Spindel 5 hat oben einen Spindelkopf 6, der über einen Abschlussdeckel 4 auf das oberste Wendelsegment 2 drückt. Am unteren Ende der Spindel 5 ist ein Gewinde 7 vorhanden, das mit einem an der Maschine vorgesehenen Gewinde zusammenwirkt. Diese Montagevariante hat den Vorteil, dass die Wendel als Gesamtpaket ausgetauscht werden kann, was insbesondere eine Zeitersparnis beim Umrüsten eines Vibrationswendelförderers zur Folge hat.

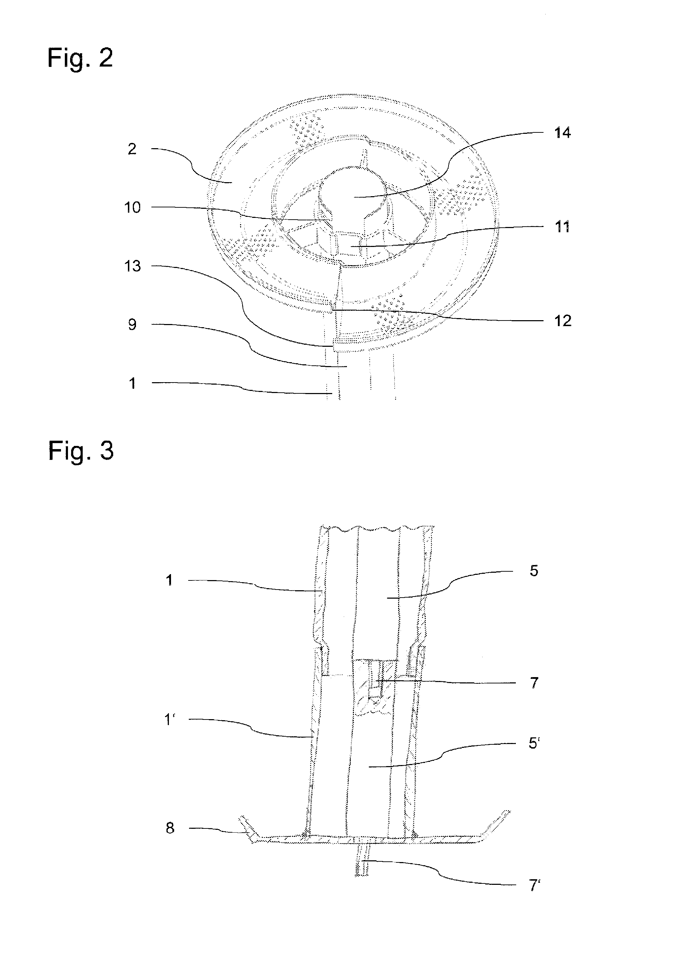

Figur 2 zeigt in einem gegenüber Figur 1 vergrösserten Massstab das obere Ende des Tragrohrs 1 und das oberste Wendelsegment 2, wobei die darunter liegenden Wendelsegmente der Einfachheit halber nicht dargestellt sind. Damit die Wendelsegmente 2 nur in einer definierten Drehlage auf das Tragrohr 1 aufgesteckt werden und sich darauf nicht drehen können, hat das Tragrohr 1 einen nicht vollständig kreisrunden Querschnitt. Im dargestellten Beispiel hat das Tragrohr 1 einen Längsschlitz 9 und die zentrale Öffnung 14 des Wendelsegments 2 ist mit einem Passteil 11 ausgestattet, der in diesen Längsschlitz 9 eingreift. Alternativ sind andere Querschnittskombinationen denkbar, die den gleichen Zweck erfüllen, nämlich das Drehen der Wendelsegmente 2 auf dem Tragrohr 1 zu verhindern, beispielsweise ein ovaler Querschnitt, ein mehreckiger Querschnitt oder ein runder Querschnitt mit mindestens einem nichtrunden Sektor. Auch Querschnitte mit Nuten und damit zusammenwirkenden Rippen oder Nocken kommen in Frage. Wie Figur 2 weiter zeigt, ist am oberen Ende des Tragrohres 1 eine vom Längsschlitz 9 ausgehende, im Wesentlichen horizontal verlaufende Ausnehmung 10 vorhanden, die zusammen mit einem nicht dargestellten Zapfen im Inneren des Spannrings 3 (Figur 1) einen Bajonettverschluss bildet, mit dem der Spannring 3 auf dem Tragrohr fixiert wird und damit die Wendelsegmente 2 festhält. Selbstverständlich sind auch andere Befestigungsarten des Spannrings 3 am Tragrohr 1 denkbar, beispielsweise eine Gewindeverbindung. Schliesslich ist in der Figur 2 auch eine obere Anschlussfläche 12 und eine untere Anschlussfläche 13 zu erkennen von denen jede im montierten Zustand der Wendelsegmente 2 mit einer entsprechenden Anschlussfläche eines benachbarten Wendelsegments 2 in Kontakt steht und so einen absatzlosen Übergang der Transportbahn gewährleistet.

Die erfindungsgemässe Konstruktion erlaubt neben der oben beschriebenen Montageart auch eine weitere Montageart, die nachfolgend unter Bezugnahme auf die Figur 3 beschrieben wird. Zuerst wird das Tragrohr 1 auf die Maschine aufgesetzt, auf der die Wendel später verwendet werden soll. Vorzugsweise kann dabei das Tragrohr 1 oder alternativ ein Basistragrohr 1' mittels einer Teilspindel 5' auf der Maschine befestigt werden, beispielsweise wie dies in Figur 3 dargestellt ist. Dann werden die einzelnen Wendelsegmente 2 auf das Tragrohr aufgeschoben und das letzte Wendelsegment 2 wird mit Hilfe des Spannrings 3 verriegelt. Die Spindel 5 wird auf die Teilspindel 5' aufgesetzt und schliesslich wird wie oben beschrieben die ganze Wendel mit Hilfe des Abschlussdeckels 4 durch die Spindel 5 festgespannt. Ein wesentlicher Vorteil dieser Montageart besteht darin, dass nicht das ganze Wendelpaket auf die Maschine gehoben werden muss, sondern die einzelnen Wendelabschnitte 2 nacheinander aufgesetzt werden können. Um die Reihenfolge der Montage bzw. Demontage zu gewährleisten oder eine falsche Montage zu vermeiden, können unterschiedliche Gewindearten oder Steigungen für die Gewinde 7 und 7' vorgesehen werden.

Die an Hand von Figur 3 beschriebene Ausführungsart ermöglicht gleichzeitig, die Länge der Wendel entsprechend der erforderlichen Länge der Transportbahn anzupassen, indem entweder unterschiedlich lange Tragrohre 1 und Spindeln 5 vorrätig gehalten werden oder aber das Tragrohr 1 und die Spindel 5 bedarfsweise aus mehreren relativ kurzen Abschnitten zusammengesetzt werden, um so eine unterschiedliche Anzahl von Wendelsegmenten aufzunehmen und zu fixieren.

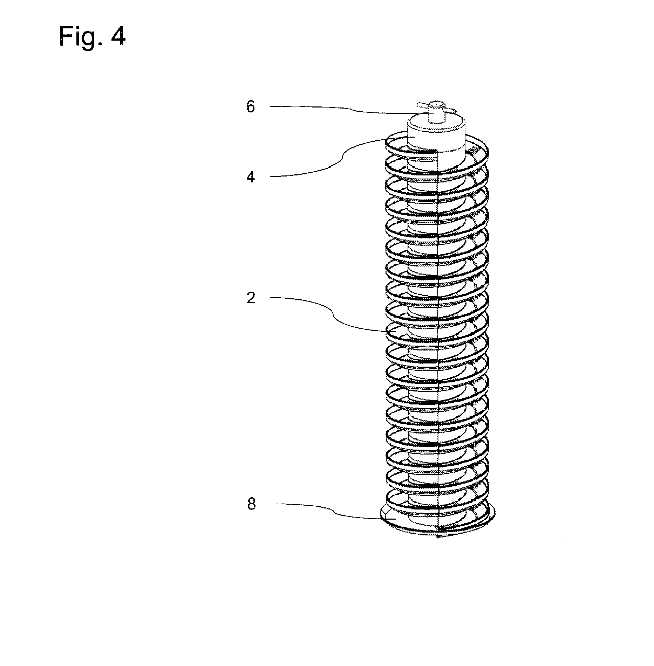

Schliesslich zeigt Figur 4 eine fertig montierte Wendel, wobei eine Anzahl Wendelsegmente 2, der Abschlussdeckel 4, der Spindelkopf 6 und der Einlaufteller 8 gut zu erkennen sind.

### Bezugszeichenliste

- 1: Tragrohr
- 1': Basistragrohr
- 2: Wendelsegment
- 3: Spannring
- 4: Abschlussdeckel
- 5: Spindel
- 5': Teilspindel
- 6: Spindelkopf
- 7: Gewinde
- 7': Gewinde von 5'
- 8: Einlaufteller
- 9: Längsschlitz
- 10: Ausnehmung
- 11: Passteil
- 12: Obere Anschlussfläche
- 13: Untere Anschlussfläche
- 14: zentrale Öffnung

## Patentansprüche

1. Wendel für einen Vibrationswendelförderer, wobei die Wendel aus mehreren in Richtung der Längsachse der Wendel aneinander angrenzenden Wendelsegmenten (2) zusammengesetzt ist, **dadurch gekennzeichnet, dass** die Wendelsegmente (2) auf einem zentralen Tragrohr (1) abnehmbar angeordnet sind.

2. Wendel nach Anspruch 1, **dadurch gekennzeichnet, dass** die Wendelsegmente (2) jeweils einen Wendelumgang enthalten.

3. Wendel nach einem der vorangehenden Ansprüche, **dadurch gekennzeichnet, dass** am Tragrohr (1) und in einer zentralen Öffnung (14) der Wendelsegmente (2) zusammenwirkende Elemente (9, 11) vorhanden sind, die das Drehen der Wendelsegmente (2) auf dem Tragrohr (1) verhindern.

4. Wendel nach einem der vorangehenden Ansprüche, **dadurch gekennzeichnet, dass** an einem ersten Ende der Wendel ein mit dem Tragrohr (1) verbundener Spannring (3) angeordnet ist.

5. Wendel nach Anspruch 4, **dadurch gekennzeichnet, dass** der Spannring (3) durch eine Bajonettverbindung (10) mit dem Tragrohr (1) verbunden ist.

6. Wendel nach einem der vorangehenden Ansprüche, **dadurch gekennzeichnet, dass** an einem zweiten Ende der Wendel ein mit dem Tragrohr (1) verbundener Einlaufteller (8) angeordnet ist.

7. Wendel nach einem der vorangehenden Ansprüche, **dadurch gekennzeichnet, dass** das Tragrohr (1) und die darauf angeordneten Wendelsegmente von einer Spindel (5) durchragt werden, die dazu bestimmt ist, die Wendel an einem Maschinenteil zu befestigen.

8. Wendel nach Anspruch 7, **dadurch gekennzeichnet, dass** die Spindel (5) an mindestens einem ihrer Enden ein Gewinde (7) hat.

9. Wendel nach einem der vorangehenden Ansprüche, **dadurch gekennzeichnet, dass** das Tragrohr (1) aus mindestens zwei axial hintereinander angeordneten Teilen (1, 1') besteht.

10. Wendel nach einem der vorangehenden Ansprüche, **dadurch gekennzeichnet, dass** die Spindel (5) aus mindestens zwei axial hintereinander angeordneten Teilen (5, 5') besteht.

11. Wendel nach Anspruch 10, **dadurch gekennzeichnet, dass** die Teile (5, 5') der Spindel durch eine Gewindeverbindung (7) miteinander verbunden sind.
